# EUROPEAN PATENT SPECIFICATION

(11) **EP 3 085 430 B1**
(45) Date of publication and mention of the grant of the patent: **01.01.2020**
(21) Application number: 16165884.4
(22) Date of filing: 18.04.2016
(51) Int. Cl.: B01D 53/047, B01D 53/04

(54) **METHODS AND DEVICES FOR DESULPHURIZING A GAS MIXTURE WITH A PRESSURE SWING ADSORPTION PROCESS**
VERFAHREN UND EINRICHTUNGEN ZUR ENTSCHWEFELUNG EINES GASGEMISCHES IN EINEM DRUCKWECHSEL-ADSORPTIONSVERFAHREN (PSA)
PROCÉDÉS ET DISPOSITIFS POUR DÉSULFURER UN MÉLANGE GAZEUX SUIVANT UN PROCÉDÉ D'ADSORPTION PAR PRESSION OSCILLANTE (PSA)

(30) Priority: 23.04.2015 NL 2014701
(43) Date of publication of application: 26.10.2016
(73) Proprietor: Green Vision Holding B.V., 6827 AV Arnhem (NL)
(72) Inventor: SCHOLTEN, Anton, 7321 LE Apeldoorn (NL); WESTENDORP, Gerard, 6671 BL Zetten (NL)
(74) Representative: van Dam, Vincent

(56) References cited:
- FR-A1- 2 836 064
- FR-A1- 2 921 277
- GB-A- 1 370 814
- US-A1- 2012 011 856

## Description

The invention relates to a method for desulphurizing a sulphurous first gas mixture comprising at least a hydrocarbon gas, which method comprises the steps of (i) providing the sulphurous first gas mixture, (ii) separating the sulphurous first gas mixture into a desulphurized second gas mixture and a sulphurous third gas mixture with a pressure swing adsorption process (PSA process) in a first separating device, wherein the first gas mixture is admitted into at least one vessel, purged with a sulphur-free purge gas, in which an adsorption mass for adsorbing sulphurous material is received, wherein at least a part of the desulphurized second gas mixture separated in the second step (ii) is guided to a first converting device in which the second gas mixture is converted in a third step (iii) into at least a sulphur-free fourth gas mixture.

Depending on the type of converting device, the fourth gas mixture is a converted gas mixture intended for further use or is a byproduct obtained in the third step (iii) during the conversion of the second gas mixture into a converted product.

The term "convert" must thus be interpreted broadly and, if the sulphurous gas mixture is sulphurous natural gas, for instance comprises of generating mechanical power in a gas engine, generating hydrogen in a hydrogen generator, or generating electricity using a combination of a reformer and a fuel cell. In these examples the "converted product" is respectively mechanical power, hydrogen gas and electricity, and the sulphurous gas mixture comprises carbon dioxide.

Such a method is per se known.

According to the known method a part of the gas mixture desulphurized in the second step (ii) is guided back to the at least one vessel for the purpose of purging this vessel.

It is considered an inherent drawback of the known method that a part of the desulphurized gas mixture is thus not used for converting this gas mixture into a converted product in the converting device.

FR 2 921 277 A1 discloses a process and a device for removal of mercaptans from natural gas. The method involves circulating gas through acid adsorbing solid, in order to adsorb a portion of mercaptans (4) in gas and obtain the acid adsorbent solid carried by the mercaptans and the gas debased in the mercaptans. The sulphur free gas thus obtained is transformed in a fractionation unit, and part of the transformed sulphur free gas mixture is uses as a purge gas for the adsorption vessel.

It is an object of the invention to improve the efficiency of the known method by preventing or at least limiting use of the gas mixture desulphurized in the second step (ii) for the purpose of purging the at least one vessel.

This object is realized, and other advantages gained, with a method according to any of the claims 1, 2 or 4.

The invention is based on the insight that, other than with a prior art method, it is not necessary for the purpose of purging a vessel of a PSA separating device to perform this purging with a clean product gas (the desulphurized second gas mixture) separated in this PSA device, but that any gas mixture obtained from that second gas mixture by means of conversion is in principle suitable to be used as purge gas.

According to the invention, sulphurous natural gas is separated in a PSA separating device into sulphur-free natural gas and sulphurous residual gases. Other than in a prior art method, no purified sulphur-free natural gas need be guided back to the PSA device for purging this device, but use is made for purging purposes of the (sulphur-free) gases converted in a gas engine, a gas turbine, a fuel cell or in a hydrogen generator acting as first converting device. This results in a cost saving relative to known methods.

In an embodiment of a method according to the invention, wherein the part of the sulphur-free fourth gas mixture obtained in the third step (iii) is guided to a second separating device for separating this part into a fifth and a sixth gas mixture, at least a part of the fifth or sixth gas mixture is guided to the at least one vessel for the purpose of purging this vessel.

If in this method the converting device is a hydrogen generator, the fifth gas mixture comprises hydrogen gas (H₂) and the sixth gas mixture comprises carbon dioxide (CO₂), at least a part of the sixth gas mixture is guided to the at least one vessel for the purpose of purging this vessel.

In this embodiment sulphurous natural gas is separated in a PSA separating device into sulphur-free natural gas and sulphurous residual gases, and the sulphur-free natural gas is for the most part converted in the hydrogen generator, with the addition of oxygen, air or heat, into hydrogen gas, carbon dioxide, carbon monoxide and water. Other than in a prior art method, no purified sulphur-free natural gas need be guided back to the PSA device for purging this device, but use is made for purging purposes of the (sulphur-free) converted residual gases from the reformer (substantially carbon dioxide, carbon monoxide), which results in a cost saving relative to known methods.

The second separating device is for instance a membrane permeable to hydrogen gas (H₂) here, wherein the residual gases comprise at least carbon dioxide (CO₂), or the separating device is for instance a device for separating with a pressure swing adsorption process (PSA process), wherein the residual gases comprise at least carbon dioxide (CO₂).

The second converting device is for instance a fuel cell, and the residual gases comprise here at least carbon dioxide (CO₂).

The invention further relates to a device for desulphurizing according to the above described methods a sulphurous first gas mixture comprising at least a hydrocarbon gas, as claimed in any of the claims 9, 10 or 13. According to the claims, the first converting device is a gas engine, a gas turbine, a fuel cell or a hydrogen generator.

In an embodiment of this device, the first converting device is a fuel cell, for instance a solid oxide fuel cell (SOFC). The sulphur-free fourth gas mixture comprises here substantially carbon dioxide, carbon monoxide and unused methane.

In a subsequent embodiment of a device for desulphurizing according to the above described method a sulphurous first gas mixture comprising at least a hydrocarbon gas, this device comprises:
a first separating device for separating the sulphurous first gas mixture with a pressure swing adsorption process (PSA process) into a desulphurized second gas mixture and a sulphurous third gas mixture, this first separating device comprising at least one vessel in which an adsorption mass for adsorbing sulphurous material is received, a first converting device for converting the second gas mixture into at least a sulphur-free fourth gas mixture, and a second separating device for separating at least a part of the sulphur-free fourth gas mixture into a fifth and a sixth gas mixture, wherein return conduit means are provided for guiding at least a part of the fifth or sixth gas mixture to the at least one vessel for the purpose of purging this vessel.

In an embodiment of this device, wherein the first gas mixture comprises natural gas and the first converting device comprises a hydrogen generator, the fifth gas mixture comprises hydrogen gas (H₂) and the sixth gas mixture comprises carbon dioxide (CO₂), this device is provided with return conduit means for guiding at least a part of the sixth gas mixture to the at least one vessel for the purpose of purging this vessel.

In a subsequent embodiment of a device for desulphurizing according to the above described method a sulphurous first gas mixture comprising at least a hydrocarbon gas, this device comprises:
a first separating device for separating the sulphurous first gas mixture with a pressure swing adsorption process (PSA process) into a desulphurized second gas mixture and a sulphurous third gas mixture, this first separating device comprising at least one vessel in which an adsorption mass for adsorbing sulphurous material is received, a first converting device for converting the second gas mixture into at least a fourth gas mixture comprising hydrogen gas (H₂) and carbon dioxide (CO₂), this first converting device comprising a hydrogen generator, a second separating device for separating at least a part of the sulphur-free fourth gas mixture into a fifth and a sixth gas mixture, and a second converting device for converting the fourth or fifth gas mixture into at least a sulphur-free seventh gas mixture, wherein return conduit means are provided for guiding at least a part of the seventh gas mixture to the at least one vessel for the purpose of purging this vessel.

The second separating device is here for instance a membrane permeable to hydrogen gas (H₂) or a device for separating with a pressure swing adsorption process (PSA process).

The second separating device comprises for instance a membrane permeable to hydrogen gas (H₂) or a device for separating with a pressure swing adsorption process (PSA process) .

In another embodiment of a device for desulphurizing according to the above described method a sulphurous first gas mixture comprising at least a hydrocarbon gas, this device comprises:
a first separating device for separating the sulphurous first gas mixture with a pressure swing adsorption process (PSA process) into a desulphurized second gas mixture and a sulphurous third gas mixture, this first separating device comprising at least one vessel in which an adsorption mass for adsorbing sulphurous material is received, a first converting device for converting the second gas mixture into at least a fourth gas mixture comprising hydrogen gas (H₂) and carbon dioxide (CO₂), this first converting device comprising a hydrogen generator, and a second converting device for converting the fourth gas mixture into at least a sulphur-free residual gas mixture, wherein return conduit means are provided for guiding at least a part of the residual gas mixture to the at least one vessel for the purpose of purging this vessel.

The second converting device in these latter embodiments is for instance a fuel cell. The residual gases comprise here at least carbon dioxide (CO₂).

The hydrogen generator is for instance a steam reformer, an autothermal reformer or a partial oxidation reactor.

The invention will be elucidated hereinbelow on the basis of exemplary embodiments, with reference to the drawings.

In the drawings
Fig. 1 is a schematic view of a first embodiment of a method and device according to the invention for desulphurizing a sulphurous gas mixture,
Fig. 2 is a schematic view of a second embodiment of a method and device according to the invention for desulphurizing a sulphurous gas mixture,
Fig. 3 is a schematic view of a third embodiment of a method and device according to the invention for desulphurizing a sulphurous gas mixture,
Fig. 4 is a schematic view of a fourth embodiment of a method and device according to the invention for desulphurizing a sulphurous gas mixture, and
Fig. 5 is a schematic view of a fifth embodiment of a method and device according to the invention for desulphurizing a sulphurous gas mixture.

Corresponding components are designated in the figures with the same reference numerals.

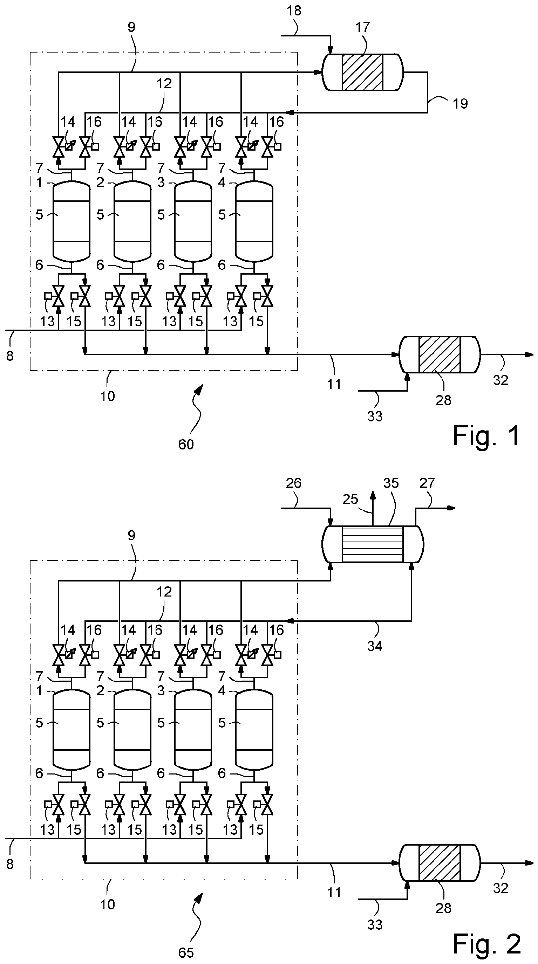

Fig. 1 is a schematic view of a method and device 60 for desulphurizing a sulphurous natural gas mixture with a PSA apparatus 10, from which the product gas is fed to a gas engine 17.

PSA apparatus 10 comprises four vessels 1, 2, 3, 4, each having an adsorption bed with an adsorption mass 5 of sulphur adsorbing material, for instance a zeolite, active carbon, pillard clays, metal-organic frameworks (MOFs) or CMS (carbon molecular sieve) material, and having an inlet 6 and an outlet 7. Vessels 1, 2, 3, 4 are connected to four parallel conduits, i.e. a distribution conduit 8 for the sulphurous gas mixture (for instance natural gas to which a sulphurous odorant has been added) for separating, a manifold 9 for the separated product gas (methane), a manifold 11 for the separated waste gas (sulphurous methane), and a distribution conduit 12 for equalization and cleaning gas. Present in each of the conduits 8, 9, 11, 12 for each of the respective vessels 1, 2, 3, 4 is a feed valve 13, a product valve 14, a waste gas valve 15 and an equalization and cleaning valve 16.

Gas engine 17 is provided with an inlet conduit 18 for air and with an outlet conduit 19 for combustion gases which is coupled to distribution conduit 12. The coupling of outlet conduit 19 to distribution conduit 12 enables vessels 1, 2, 3, 4 of PSA apparatus 10 to be purged with the sulphur-free combustion gases from gas engine 17, after which these combustion gases, mixed with the (slightly) sulphurous gases desorbed from adsorption masses 5, are guided as waste gas via manifold 11 to a burner 28 which is provided with an inlet conduit 33 for air and an outlet conduit 32 for combustion gases.

Fig. 2 is a schematic view of a second method and device 65 for desulphurizing a sulphurous natural gas mixture with a PSA apparatus 10, from which the product gas, desulphurized natural gas, is fed to a solid oxide fuel cell (SOFC) 35 in which the natural gas is converted, with oxygen from air supplied via an air supply conduit 26, into a product electricity, indicated symbolically by arrow 25, cathode gas (low-oxygen air), discharged via a discharge conduit 27, and sulphur-free residual gases (anode gas). SOFC 35 is provided with an outlet conduit 34 for the residual gases which is coupled to distribution conduit 12. The coupling of outlet conduit 34 to distribution conduit 12 enables vessels 1, 2, 3, 4 of PSA apparatus 10 to be purged with the sulphur-free residual gases from SOFC 35, after which these residual gases, mixed with the (slightly) sulphurous gases desorbed from adsorption masses 5, are guided as waste gas via manifold 11 to a burner 28.

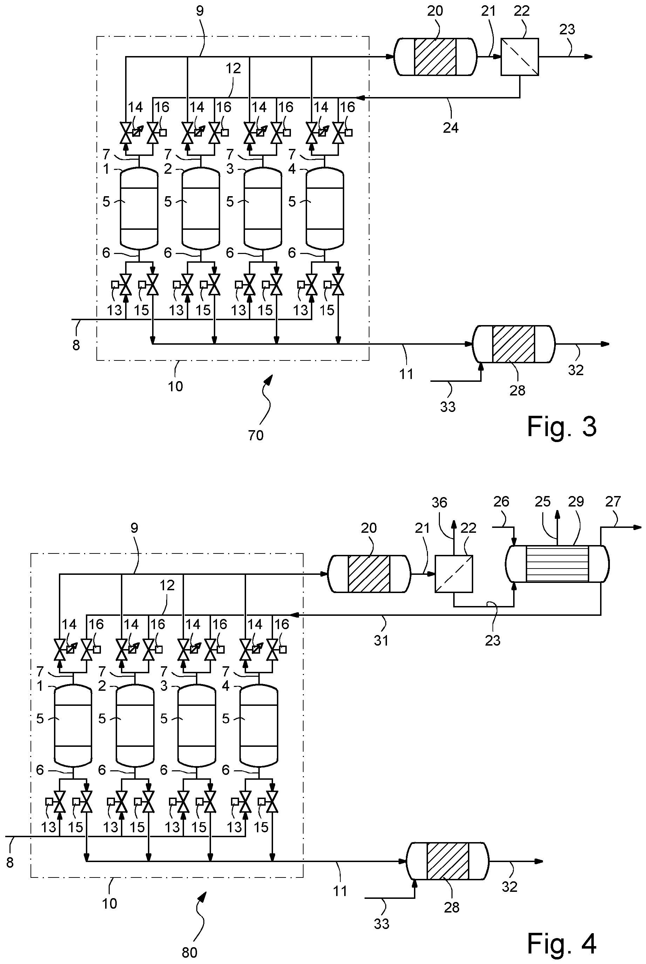

Fig. 3 is a schematic view of a third method and device 70 for desulphurizing a sulphurous natural gas mixture with a PSA apparatus 10, from which the product gas, desulphurized natural gas, is fed to a steam reformer 20 in which the natural gas is converted, with the addition of steam, into a gas mixture of hydrogen, carbon monoxide, carbon dioxide. This gas mixture is guided via a conduit 21 to a membrane separator 22, where it is separated into pure hydrogen and residual gases. The membrane separator is provided with an outlet conduit 23 for pure hydrogen and an outlet conduit 24 for the residual gases which is coupled to distribution conduit 12. The coupling of outlet conduit 24 to distribution conduit 12 enables vessels 1, 2, 3, 4 of PSA apparatus 10 to be purged with the sulphur-free residual gases from membrane separator 22, after which these residual gases, mixed with the (slightly) sulphurous gases desorbed from adsorption masses 5, are guided as waste gas via manifold 11 to a burner 28.

Fig. 4 is a schematic view of a fourth method and device 80 for desulphurizing a sulphurous natural gas mixture with a PSA apparatus 10, from which the product gas, desulphurized natural gas, is fed to a steam reformer 20 in which the natural gas is converted, with the addition of steam, into a gas mixture of hydrogen, carbon monoxide, carbon dioxide. This gas mixture is guided via a conduit 21 to a membrane separator 22, where it is separated into pure hydrogen and residual gases. The membrane separator is provided with an outlet conduit 36 for the residual gases and an outlet conduit 23 for pure hydrogen, which is coupled to a PEM (Proton Exchange Membrane) fuel cell 29 in which the pure hydrogen is converted, with oxygen from air supplied via an air supply conduit 26, into a product electricity, indicated symbolically by arrow 25, cathode gas (low-oxygen air), discharged via a discharge conduit 27, and sulphur-free residual gases (anode gas). The PEM fuel cell 29 is provided with an outlet conduit 31 for the residual gases which is coupled to distribution conduit 12. The coupling of outlet conduit 31 to distribution conduit 12 enables vessels 1, 2, 3, 4 of PSA apparatus 10 to be purged with the sulphur-free residual gases from PEM fuel cell 29, after which these residual gases, mixed with the (slightly) sulphurous gases desorbed from adsorption masses 5, are guided as waste gas via manifold 11 to a burner 28.

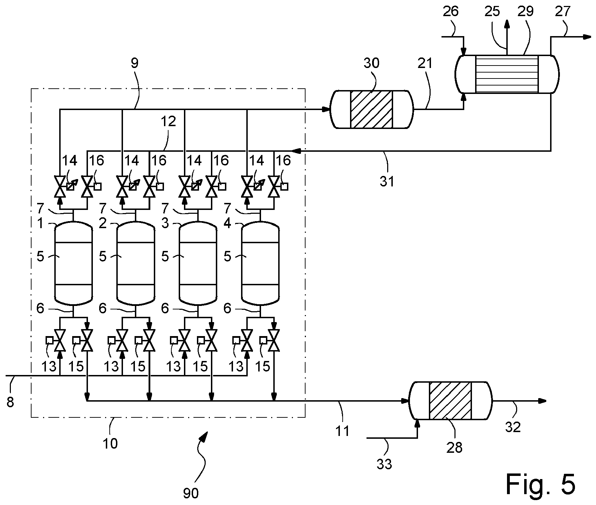

Fig. 5 is a schematic view of a fifth method and device 90 for desulphurizing a sulphurous natural gas mixture with a PSA apparatus 10, from which the product gas, desulphurized natural gas, is fed to an autothermal reformer 30 in which the natural gas is converted, with the addition of oxygen, into a gas mixture of hydrogen, carbon monoxide, carbon dioxide. This gas mixture is guided via a conduit 21 to a PEM (Proton Exchange Membrane) fuel cell 29 in which the hydrogen from the supplied gas mixture is converted, with oxygen from air supplied via an air supply conduit 26, into a product electricity, indicated symbolically by arrow 25, cathode gas (low-oxygen air), discharged via a discharge conduit 27, and sulphur-free residual gases (anode gas). The PEM fuel cell 29 is provided with an outlet conduit 31 for the residual gases which is coupled to distribution conduit 12. The coupling of outlet conduit 31 to distribution conduit 12 enables vessels 1, 2, 3, 4 of PSA apparatus 10 to be purged with the sulphur-free residual gases from PEM fuel cell 29, after which these residual gases, mixed with the (slightly) sulphurous gases desorbed from adsorption masses 5, are guided as waste gas via manifold 11 to a burner 28.
This gas mixture is guided via a conduit 21 to a membrane separator 22, where it is separated into pure hydrogen and residual gases. The membrane separator is provided with an outlet conduit 23 for pure hydrogen and an outlet conduit 24 for the residual gases which is coupled to distribution conduit 12. The coupling of outlet conduit 24 to distribution conduit 12 enables vessels 1, 2, 3, 4 of PSA apparatus 10 to be purged with the sulphur-free residual gases from membrane separator 22, after which these residual gases, mixed with the (slightly) sulphurous gases desorbed from adsorption masses 5, are guided as waste gas via manifold 11 to a burner 28.

Fig. 4 is a schematic view of a fourth method and device 80 for desulphurizing a sulphurous natural gas mixture with a PSA apparatus 10, from which the product gas, desulphurized natural gas, is fed to a steam reformer 20 in which the natural gas is converted, with the addition of steam, into a gas mixture of hydrogen, carbon monoxide, carbon dioxide. This gas mixture is guided via a conduit 21 to a membrane separator 22, where it is separated into pure hydrogen and residual gases. The membrane separator is provided with an outlet conduit 36 for the residual gases and an outlet conduit 23 for pure hydrogen, which is coupled to a PEM (Proton Exchange Membrane) fuel cell 29 in which the pure hydrogen is converted, with oxygen from air supplied via an air supply conduit 26, into a product electricity, indicated symbolically by arrow 25, cathode gas (low-oxygen air), discharged via a discharge conduit 27, and sulphur-free residual gases (anode gas). The PEM fuel cell 29 is provided with an outlet conduit 31 for the residual gases which is coupled to distribution conduit 12. The coupling of outlet conduit 31 to distribution conduit 12 enables vessels 1, 2, 3, 4 of PSA apparatus 10 to be purged with the sulphur-free residual gases from PEM fuel cell 29, after which these residual gases, mixed with the (slightly) sulphurous gases desorbed from adsorption masses 5, are guided as waste gas via manifold 11 to a burner 28.

Fig. 5 is a schematic view of a fifth method and device 90 for desulphurizing a sulphurous natural gas mixture with a PSA apparatus 10, from which the product gas, desulphurized natural gas, is fed to an autothermal reformer 30 in which the natural gas is converted, with the addition of oxygen, into a gas mixture of hydrogen, carbon monoxide, carbon dioxide. This gas mixture is guided via a conduit 21 to a PEM (Proton Exchange Membrane) fuel cell 29 in which the hydrogen from the supplied gas mixture is converted, with oxygen from air supplied via an air supply conduit 26, into a product electricity, indicated symbolically by arrow 25, cathode gas (low-oxygen air), discharged via a discharge conduit 27, and sulphur-free residual gases (anode gas). The PEM fuel cell 29 is provided with an outlet conduit 31 for the residual gases which is coupled to distribution conduit 12. The coupling of outlet conduit 31 to distribution conduit 12 enables vessels 1, 2, 3, 4 of PSA apparatus 10 to be purged with the sulphur-free residual gases from PEM fuel cell 29, after which these residual gases, mixed with the (slightly) sulphurous gases desorbed from adsorption masses 5, are guided as waste gas via manifold 11 to a burner 28.

## Claims

1. Method for desulphurizing a sulphurous first gas mixture comprising at least a hydrocarbon gas, which method comprises the steps of
(i) providing the sulphurous first gas mixture,
(ii) separating the sulphurous first gas mixture into a desulphurized second gas mixture and a sulphurous third gas mixture with a pressure swing adsorption process (PSA process) in a first separating device, wherein the first gas mixture is admitted into at least one vessel (1, 2, 3, 4), purged with a sulphur-free purge gas, in which an adsorption mass (5) for adsorbing sulphurous material is received,
wherein at least a part of the desulphurized second gas mixture separated in the second step (ii) is guided to a first converting device in which the second gas mixture is converted in a third step (iii) into at least a sulphur-free fourth gas mixture,
wherein the part of the sulphur-free fourth gas mixture obtained in the third step (iii) is guided directly to the at least one vessel (1, 2, 3, 4) for the purpose of purging this vessel, and
wherein the first gas mixture comprises natural gas, the first converting device is one of a gas engine and a gas turbine, and the sulphur-free fourth gas mixture comprises carbon dioxide (CO₂).

2. Method for desulphurizing a sulphurous first gas mixture comprising at least a hydrocarbon gas, which method comprises the steps of
(i) providing the sulphurous first gas mixture,
(ii) separating the sulphurous first gas mixture into a desulphurized second gas mixture and a sulphurous third gas mixture with a pressure swing adsorption process (PSA process) in a first separating device, wherein the first gas mixture is admitted into at least one vessel (1, 2, 3, 4), purged with a sulphur-free purge gas, in which an adsorption mass (5) for adsorbing sulphurous material is received,
wherein at least a part of the desulphurized second gas mixture separated in the second step (ii) is guided to a first converting device in which the second gas mixture is converted in a third step (iii) into at least a sulphur-free fourth gas mixture,
wherein the part of the sulphur-free fourth gas mixture obtained in the third step (iii) is guided directly to the at least one vessel (1, 2, 3, 4) for the purpose of purging this vessel, and
wherein the first gas mixture comprises natural gas, the first converting device is a fuel cell and the sulphur-free fourth gas mixture comprises carbon dioxide (CO₂).

3. Method as claimed in any of the claims 1-2,
wherein a part of the sulphur-free fourth gas mixture obtained in the third step (iii) is guided to a second separating device for separating this part into a fifth and a sixth gas mixture, **characterized in that** at least a part of the fifth or sixth gas mixture is guided to the at least one vessel (1, 2, 3, 4) for the purpose of purging this vessel.

4. Method for desulphurizing a sulphurous first gas mixture comprising at least a hydrocarbon gas, which method comprises the steps of
(i) providing the sulphurous first gas mixture,
(ii) separating the sulphurous first gas mixture into a desulphurized second gas mixture and a sulphurous third gas mixture with a pressure swing adsorption process (PSA process) in a first separating device, wherein the first gas mixture is admitted into at least one vessel (1, 2, 3, 4), purged with a sulphur-free purge gas, in which an adsorption mass (5) for adsorbing sulphurous material is received,
wherein at least a part of the desulphurized second gas mixture separated in the second step (ii) is guided to a first converting device in which the second gas mixture is converted in a third step (iii) into at least a sulphur-free fourth gas mixture,
wherein for purging the at least one vessel (1, 2, 3, 4) use is made of at least a part of the sulphur-free fourth gas mixture obtained in the third step (iii), and
wherein the first gas mixture comprises natural gas, the first converting device is a hydrogen generator, the fourth gas mixture comprises hydrogen gas (H₂), wherein at least a part of the fourth gas mixture is guided to a second converting device in which the fourth gas mixture is converted into at least a sulphur-free fifth gas mixture, **characterized in that** at least a part of the fifth gas mixture is guided to the at least one vessel (1, 2, 3, 4) for the purpose of purging this vessel.

5. Method as claimed in claim 4,
wherein the part of the sulphur-free fourth gas mixture obtained in the third step (iii) is guided to a second separating device for separating this part into a fifth gas mixture comprising hydrogen gas (H₂) and a sixth gas mixture comprising carbon dioxide (CO₂),
wherein at least a part of the fifth gas mixture is guided to a second converting device in which the fifth gas mixture is converted into at least a sulphur-free seventh gas mixture, **characterized in that** at least a part of the seventh gas mixture is guided to the at least one vessel (1, 2, 3, 4) for the purpose of purging this vessel.

6. Method as claimed in any claim 5, wherein the second separating device is one of a membrane permeable to hydrogen gas (H₂) and a device for separating with a pressure swing adsorption process (PSA process).

7. Method as claimed in any of the claims 4-5, wherein the second converting device is a fuel cell.

8. Method as claimed in any of the claims 4-7, wherein the hydrogen generator is one of a steam reformer, an autothermal reformer and a partial oxidation reactor.

9. Device (60) for desulphurizing according to a method as claimed in claim 1 a sulphurous first gas mixture comprising at least a hydrocarbon gas, comprising
a first separating device (10) for separating the sulphurous first gas mixture with a pressure swing adsorption process (PSA process) into a desulphurized second gas mixture and a sulphurous third gas mixture, this first separating device (10) comprising at least one vessel (1, 2, 3, 4) in which an adsorption mass (5) for adsorbing sulphurous material is received, and
a first converting device (17, 20, 30, 35) for converting the second gas mixture into at least a sulphur-free fourth gas mixture, and
return conduit means (19, 24, 31, 34) for guiding at least a part of the sulphur-free fourth gas mixture to the at least one vessel (1, 2, 3, 4) for the purpose of purging this vessel,
wherein the first gas mixture comprises natural gas, **characterized in that** the first converting device is one of a gas engine (17) and a gas turbine.

10. Device (65) for desulphurizing according to a method as claimed in claim 2 a sulphurous first gas mixture comprising at least a hydrocarbon gas, comprising
a first separating device (10) for separating the sulphurous first gas mixture with a pressure swing adsorption process (PSA process) into a desulphurized second gas mixture and a sulphurous third gas mixture, this first separating device (10) comprising at least one vessel (1, 2, 3, 4) in which an adsorption mass (5) for adsorbing sulphurous material is received, and
a first converting device (17, 20, 30, 35) for converting the second gas mixture into at least a sulphur-free fourth gas mixture, and return conduit means (19, 24, 31, 34) for guiding at least a part of the sulphur-free fourth gas mixture to the at least one vessel (1, 2, 3, 4) for the purpose of purging this vessel,
wherein the first gas mixture comprises natural gas, **characterized in that** the first converting device is a fuel cell (35).

11. Device as claimed in any of the claims 9-10,
comprising a second separating device (22) for separating at least a part of the sulphur-free fourth gas mixture into a fifth and a sixth gas mixture, **characterized by** return conduit means for guiding at least a part of the fifth or sixth gas mixture to the at least one vessel (1, 2, 3, 4) for the purpose of purging this vessel.

12. Device as claimed in claim 11, **characterized in that** the second separating device comprises one of a membrane (22) permeable to hydrogen gas (H₂) and a device for separating with a pressure swing adsorption process (PSA process).

13. Device (90) for desulphurizing according to a method as claimed in claim 4 a sulphurous first gas mixture comprising at least natural gas, comprising
a first separating device (10) for separating the sulphurous first gas mixture with a pressure swing adsorption process (PSA process) into a desulphurized second gas mixture and a sulphurous third gas mixture, this first separating device (10) comprising at least one vessel (1, 2, 3, 4) in which an adsorption mass (5) for adsorbing sulphurous material is received,
a first converting device (30) for converting the second gas mixture into at least a fourth gas mixture comprising hydrogen gas (H₂) and carbon dioxide (CO₂), this first converting device comprising a hydrogen generator (30), and
a second converting device (29) for converting the fourth gas mixture into at least a sulphur-free residual gas mixture, **characterized by** return conduit means (31) for guiding at least a part of the residual gas mixture to the at least one vessel (1, 2, 3, 4) for the purpose of purging this vessel.

14. Device as claimed in claim 13, **characterized in that** the second converting device is a fuel cell (29).

15. Device as claimed in any of the claims 13-14, **characterized in that** the hydrogen generator is one of a steam reformer (20), an autothermal reformer (30) and a partial oxidation reactor.

## Patentansprüche

1. Verfahren zur Entschwefelung einer schwefelhaltigen ersten Gasmischung, umfassend mindestens ein Kohlenwasserstoffgas, wobei das Verfahren die Schritte umfasst von
(i) Bereitstellung der schwefelhaltigen ersten Gasmischung,
(ii) Auftrennung der schwefelhaltigen ersten Gasmischung in eine entschwefelte zweite Gasmischung und eine schwefelhaltige dritte Gasmischung mit einem Druckwechsel-Adsorptionsverfahren (PSA-Verfahren) in einer ersten Auftrennungsvorrichtung, worin die erste Gasmischung in mindestens ein mit einem schwefelfreien Spülgas gespültes Gefäß (1, 2, 3, 4) eingeführt wird, in dem eine Adsorptionsmasse (5) zum Adsorbieren von schwefelhaltigem Material aufgenommen ist,
wobei mindestens ein Teil der in dem zweiten Schritt (ii) entschwefelten zweiten Gasmischung einer ersten Umwandlungsvorrichtung zugeleitet wird, in der die zweite Gasmischung in einem dritten Schritt (iii) in mindestens eine schwefelfreie vierte Gasmischung umgewandelt wird,
wobei das Teil der in dem dritten Schritt (iii) erhaltenen schwefelfreien vierten Gasmischung direkt zu dem mindestens einen Gefäß (1, 2, 3, 4) geleitet wird, zum Zweck der Spülung dieses Gefäßes, und
wobei die erste Gasmischung natürliches Gas umfasst, die erste Umwandlungsvorrichtung eine von einer Gasmaschine und einer Gasturbine ist, und die schwefelfreie vierte Gasmischung Kohlenstoffdioxid (CO₂) umfasst.

2. Verfahren zur Entschwefelung einer schwefelhaltigen ersten Gasmischung, umfassend mindestens ein Kohlenwasserstoffgas, wobei das Verfahren die Schritte umfasst von
(i) Bereitstellung der schwefelhaltigen ersten Gasmischung,
(ii) Auftrennung der schwefelhaltigen ersten Gasmischung in eine entschwefelte zweite Gasmischung und eine schwefelhaltige dritte Gasmischung mit einem Druckwechsel-Adsorptionsverfahren (PSA-Verfahren) in einer ersten Auftrennungsvorrichtung, worin die erste Gasmischung in mindestens ein mit einem schwefelfreien Spülgas gespültes Gefäß (1, 2, 3, 4) eingeführt wird, in dem eine Adsorptionsmasse (5) zum Adsorbieren von schwefelhaltigem Material aufgenommen ist, wobei mindestens ein Teil der in dem zweiten Schritt (ii) aufgetrennten entschwefelten zweiten Gasmischung einer ersten Umwandlungsvorrichtung zugeleitet wird, in der die zweite Gasmischung in einem dritten Schritt (iii) in mindestens eine schwefelfreie vierte Gasmischung umgewandelt wird,
wobei das Teil der in dem dritten Schritt (iii) erhaltene schwefelfreie vierte Gasmischung direkt dem mindestens einen Gefäß (1, 2, 3, 4) zugeleitet wird, zum Zweck der Spülung dieses Gefäßes, und
wobei die erste Gasmischung natürliches Gas umfasst, die erste Umwandlungsvorrichtung eine Brennstoffzelle ist und die schwefelfreie vierte Gasmischung Kohlenstoffdioxid (CO₂)umfasst.

3. Verfahren wie beansprucht in irgendeinem der Ansprüche 1-2,
wobei ein Teil der im dritten Schritt (iii) erhaltenen schwefelfreien vierten Gasmischung einer zweiten Auftrennungsvorrichtung zugeführt wird zur Auftrennung dieses Teils in eine fünfte und eine sechste Gasmischung, **dadurch gekennzeichnet, dass** mindestens ein Teil der fünften oder sechsten Gasmischung dem mindestens einen Gefäß (1, 2, 3, 4) zugeleitet wird zum Zweck der Spülung dieses Gefäßes.

4. Verfahren zur Entschwefelung einer schwefelhaltigen ersten Gasmischung, die mindestens ein Kohlenwasserstoffgas umfasst, wobei das Verfahren die Schritte umfasst von
(i) Bereitstellung der schwefelhaltigen ersten Gasmischung,
(ii) Auftrennung der schwefelhaltigen ersten Gasmischung in eine entschwefelte zweite Gasmischung und eine schwefelhaltige dritte Gasmischung mit einem Druckwechsel-Adsorptionsverfahren (PSA-Verfahren) in einer ersten Auftrennungsvorrichtung, worin die erste Gasmischung in mindestens ein mit einem schwefelfreien Spülgas gespültes Gefäß (1, 2, 3, 4) eingeführt wird , in dem eine Adsorptionsmasse (5) zum Adsorbieren von schwefelhaltigem Material aufgenommen ist,
wobei mindestens ein Teil der in dem zweiten Schritt (ii) aufgetrennten entschwefelten zweiten Gasmischung einer ersten Umwandlungsvorrichtung zugeleitet wird, in der die zweite Gasmischung in einem dritten Schritt (iii) in mindestens eine schwefelfreie vierte Gasmischung umgewandelt wird,
wobei zum Spülen des mindestens einen Gefäßes (1, 2, 3, 4) Gebrauch gemacht wird von mindestens einem Teil der in dem dritten Schritt (iii) erhaltenen schwefelfreien vierten Gasmischung, und
wobei die erste Gasmischung natürliches Gas umfasst, die erste Umwandlungsvorrichtung ein Wasserstoffgenerator ist, die vierte Gasmischung Wasserstoffgas (H₂) umfasst, wobei mindestens ein Teil der vierten Gasmischung einer zweiten Umwandlungsvorrichtung zugeleitet wird, in der die vierte Gasmischung umgewandelt wird in mindestens eine schwefelfreie fünfte Gasmischung, **dadurch gekennzeichnet, dass** mindestens ein Teil der fünften Gasmischung dem mindestens einen Gefäß (1, 2, 3, 4) zugeleitet wird zum Zweck der Spülung dieses Gefäßes.

5. Verfahren wie beansprucht in Anspruch 4,
wobei ein Teil der in Schritt (iii) erhaltenen schwefelfreien vierten Gasmischung einer zweiten Auftrennungsvorrichtung zugeführt wird, zum Auftrennen dieses Teils in eine fünfte Gasmischung, umfassend Wasserstoffgas (H₂) und eine sechste Gasmischung, umfassend Kohlenstoffdioxid (CO₂),
wobei mindestens ein Teil der fünften Gasmischung einer zweiten Umwandlungsvorrichtung zugeführt wird, in der die fünfte Gasmischung in mindestens eine schwefelfreie siebte Gasmischung umgewandelt wird, **dadurch gekennzeichnet, dass** mindestens ein Teil der siebten Gasmischung dem mindestens einen Gefäß (1, 2, 3, 4) zugeleitet wird zum Zweck der Spülung dieses Gefäßes.

6. Verfahren wie beansprucht in Anspruch 5, wobei die zweite Auftrennungsvorrichtung eine ist von einer Membran, durchlässig für Wasserstoffgas (H₂), und einer Vorrichtung zur Auftrennung mit einem Druckwechsel-Adsorptionsverfahren (PSA-Verfahren).

7. Verfahren wie beansprucht in irgendeinem der Ansprüche 4-5, wobei die zweite Umwandlungsvorrichtung eine Brennstoffzelle ist.

8. Verfahren wie beansprucht in irgendeinem der Ansprüche 4-5, wobei der Wassertoffgenerator einer ist von einem Dampfreformer, einem Autothermalreformer und einem Teiloxidationsreaktor.

9. Vorrichtung (60) zur Entschwefelung einer schwefelhaltigen ersten Gasmischung die mindestens ein Kohlenwasserstoffgas umfasst, gemäß einem Verfahren wie beansprucht in Anspruch 1, umfassend
eine erste Auftrennungsvorrichtung (10) zur Auftrennung der schwefelhaltigen ersten Gasmischung mit einem Druckwechsel-Adsorptionsverfahren (PSA-Verfahren) in eine entschwefelte zweite Gasmischung und eine schwefelhaltige dritte Gasmischung, wobei diese erste Auftrennungsvorrichtung (10) mindestens ein Gefäß (1, 2, 3, 4) umfasst, in dem eine Adsorptionsmasse (5) zum Adsorbieren von schwefelhaltigem Material aufgenommen ist, und
eine erste Umwandlungsvorrichtung (17, 20, 30, 35) zum Umwandeln der zweiten Gasmischung in mindestens eine schwefelfreie vierte Gasmischung, und
Rückführungsmittel (19, 24, 31, 34) zum Leiten mindestens eines Teils der schwefelfreien vierten Gasmischung zu dem mindestens einen Gefäß (1, 2, 3, 4), um dieses Gefäß zu spülen,
wobei die erste Gasmischung natürliches Gas umfasst, **dadurch gekennzeichnet, dass** die erste Umwandlungsvorrichtung eine ist von einer Gasmaschine (17) und einer Gasturbine.

10. Vorrichtung (65) zur Entschwefelung einer schwefelhaltigen ersten Gasmischung, umfassend mindestens ein Kohlenwasserstoffgas, gemäß einem Verfahren wie beansprucht in Anspruch 2, , umfassend
eine erste Auftrennungsvorrichtung (10) zur Auftrennung der schwefelhaltigen ersten Gasmischung mit einem Druckwechsel-Adsorptionsverfahren (PSA-Verfahren) in eine entschwefelte zweite Gasmischung und eine schwefelhaltige dritte Gasmischung, wobei diese erste Auftrennungsvorrichtung (10) mindestens ein Gefäß (1, 2, 3, 4) umfasst, in dem eine Adsorptionsmasse (5) zum Adsorbieren von schwefelhaltigem Material aufgenommen ist, und
eine erste Umwandlungsvorrichtung (17, 20, 30, 35) zum Umwandeln der zweiten Gasmischung in mindestens eine schwefelfreie vierte Gasmischung, und Rückführungsmittel (19, 24, 31, 34) zum Leiten mindestens eines Teils der schwefelfreien vierten Gasmischung zu dem mindestens einen Gefäß (1, 2, 3, 4), um dieses Gefäß zu spülen,
wobei die erste Gasmischung natürliches Gas umfasst, **dadurch gekennzeichnet, dass** die erste Umwandlungsvorrichtung eine Brennstoffzelle (35) ist.

11. Vorrichtung, wie in irgendeinem der Ansprüche 9-10 beansprucht, umfassend eine zweite Auftrennungsvorrichtung (22) zur Auftrennung mindestens eines Teils der schwefelfreien vierten Gasmischung in eine fünfte und sechste Gasmischung, **gekennzeichnet durch** Rückführungsmittel zum Leiten mindestens eines Teils der fünften oder sechsten Gasmischung zum dem mindestens einen Gefäß (1, 2, 3, 4), zum Zweck der Spülung dieses Gefäßes.

12. Vorrichtung, wie beansprucht in Anspruch 11, **dadurch gekennzeichnet, dass** die zweite Auftrennungsvorrichtung eines von einer Membran (22), durchlässig für Wasserstoffgas (H₂), und einer Vorrichtung zur Auftrennung mit einem Druckwechsel-Adsorptionsverfahren (PSA-Verfahren) umfasst.

13. Vorrichtung (90) zur Entschwefelung einer schwefelhaltigen ersten Gasmischung die mindestens natürliches Gas umfasst, gemäß einem Verfahren wie beansprucht in Anspruch 4, umfassend
eine erste Auftrennungsvorrichtung (10) zur Auftrennung der schwefelhaltigen ersten Gasmischung mit einem Druckwechsel-Adsorptionsverfahren (PSA-Verfahren) in eine entschwefelte zweite Gasmischung und eine schwefelhaltige dritte Gasmischung, wobei diese erste Auftrennungsvorrichtung (10) mindestens ein Gefäß (1, 2, 3, 4) umfasst, in dem eine Adsorptionsmasse (5) zum Adsorbieren von schwefelhaltigem Material aufgenommen ist,
eine erste Umwandlungsvorrichtung (30) zum Umwandeln der zweiten Gasmischung in mindestens eine vierte Gasmischung, umfassend Wasserstoffgas (H₂) und Kohlenstoffdioxid (CO₂), wobei diese erste Umwandlungsvorrichtung einen Wasserstoffgenerator (30) umfasst, und
eine zweite Umwandlungsvorrichtung (29) zum Umwandeln der vierten Gasmischung in mindestens eine schwefelfreie Restgasmischung, **gekennzeichnet durch** Rückführungsmittel (31) zum Leiten mindestens eines Teils der Restgasmischung zu dem mindestens einen Gefäß (1, 2, 3, 4), um dieses Gefäß zu spülen, **gekennzeichnet durch** Rückführungsmittel (31) zum Leiten mindestens eines Teils der schwefelfreien vierten Gasmischung zu dem mindestens einen Gefäß (1, 2, 3, 4), um dieses Gefäß zu spülen.

14. Vorrichtung, wie beansprucht in irgendeinem der Ansprüche 12-13, **dadurch gekennzeichnet, dass** die zweite Umwandlungsvorrichtung eine Brennstoffzelle (29) ist.

15. Vorrichtung, wie beansprucht in irgendeinem der Ansprüche 12-14, **dadurch gekennzeichnet, dass** der Wasserstoffgenerator einer ist von einem Dampfreformer (20), einem Autothermalreformer (30) und einem Teiloxidationsreaktor.

## Revendications

1. Procédé de désulfuration d'un premier mélange gazeux sulfureux comprenant au moins un gaz hydrocarboné, lequel procédé comprend les étapes consistant à
(i) fournir le premier mélange gazeux sulfureux,
(ii) séparer le premier mélange gazeux sulfureux en un deuxième mélange gazeux désulfuré et un troisième mélange gazeux sulfureux avec un procédé d'adsorption modulée en pression (procédé AMP) dans un premier dispositif de séparation, dans lequel le premier mélange gazeux est admis dans au moins un récipient (1, 2, 3, 4), purgé avec un gaz de purge exempt de soufre, dans lequel est reçue une masse d'adsorption (5) pour adsorber un matériau sulfureux,
dans lequel au moins une partie du deuxième mélange gazeux désulfuré séparé dans la deuxième étape (ii) est guidée vers un premier dispositif de conversion dans lequel le deuxième mélange gazeux est converti dans une troisième étape (iii) en au moins un quatrième mélange gazeux exempt de soufre,
dans lequel la partie du quatrième mélange gazeux exempt de soufre obtenu dans la troisième étape (iii) est guidée directement vers l'au moins un récipient (1, 2, 3, 4) afin de purger ce récipient, et
dans lequel le premier mélange gazeux comprend du gaz naturel, le premier dispositif de conversion est l'un d'un moteur à gaz et d'une turbine à gaz, et le quatrième mélange gazeux exempt de soufre comprend du dioxyde de carbone (CO₂).

2. Procédé de désulfuration d'un premier mélange gazeux sulfureux comprenant au moins un gaz hydrocarboné, lequel procédé comprend les étapes consistant à
(i) fournir le premier mélange gazeux sulfureux,
(ii) séparer le premier mélange gazeux sulfureux en un deuxième mélange gazeux désulfuré et un troisième mélange gazeux sulfureux avec un procédé d'adsorption modulée en pression (procédé AMP) dans un premier dispositif de séparation, dans lequel le premier mélange gazeux est admis dans au moins un récipient (1, 2, 3, 4), purgé avec un gaz de purge exempt de soufre, dans lequel est reçue une masse d'adsorption (5) pour adsorber un matériau sulfureux,
dans lequel au moins une partie du deuxième mélange gazeux désulfuré séparé dans la deuxième étape (ii) est guidée vers un premier dispositif de conversion dans lequel le deuxième mélange gazeux est converti dans une troisième étape (iii) en au moins un quatrième mélange gazeux exempt de soufre,
dans lequel la partie du quatrième mélange gazeux exempt de soufre obtenu dans la troisième étape (iii) est guidée directement vers l'au moins un récipient (1, 2, 3, 4) afin de purger ce récipient, et
dans lequel le premier mélange gazeux comprend du gaz naturel, le premier dispositif de conversion est une pile à combustible et le quatrième mélange gazeux exempt de soufre comprend du dioxyde de carbone (CO₂).

3. Procédé selon l'une quelconque des revendications 1 et 2,
dans lequel une partie du quatrième mélange gazeux exempt de soufre obtenu dans la troisième étape (iii) est guidée vers un deuxième dispositif de séparation pour séparer cette partie en un cinquième et un sixième mélange gazeux, **caractérisé en ce qu'**au moins une partie du cinquième ou du sixième mélange gazeux est guidée vers l'au moins un récipient (1, 2, 3, 4) afin de purger ce récipient.

4. Procédé de désulfuration d'un premier mélange gazeux sulfureux comprenant au moins un gaz hydrocarboné, lequel procédé comprend les étapes consistant à
(i) fournir le premier mélange gazeux sulfureux,
(ii) séparer le premier mélange gazeux sulfureux en un deuxième mélange gazeux désulfuré et un troisième mélange gazeux sulfureux avec un procédé d'adsorption modulée en pression (procédé AMP) dans un premier dispositif de séparation, dans lequel le premier mélange gazeux est admis dans au moins un récipient (1, 2, 3, 4), purgé avec un gaz de purge exempt de soufre, dans lequel est reçue une masse d'adsorption (5) pour adsorber un matériau sulfureux,
dans lequel au moins une partie du deuxième mélange gazeux désulfuré séparé dans la deuxième étape (ii) est guidée vers un premier dispositif de conversion dans lequel le deuxième mélange gazeux est converti dans une troisième étape (iii) en au moins un quatrième mélange gazeux exempt de soufre,
dans lequel, pour purger l'au moins un récipient (1, 2, 3, 4), au moins une partie du quatrième mélange gazeux exempt de soufre obtenu dans la troisième étape (iii) est utilisée, et
dans lequel le premier mélange gazeux comprend du gaz naturel, le premier dispositif de conversion est un générateur d'hydrogène, le quatrième mélange gazeux comprend de l'hydrogène gazeux (H₂), dans lequel au moins une partie du quatrième mélange gazeux est guidée vers un deuxième dispositif de conversion dans lequel le quatrième mélange gazeux est converti en au moins un cinquième mélange gazeux exempt de soufre, **caractérisé en ce qu'**au moins une partie du cinquième mélange gazeux est guidée vers l'au moins un récipient (1, 2, 3, 4) afin de purger ce récipient.

5. Procédé selon la revendication 4,
dans lequel la partie du quatrième mélange gazeux exempt de soufre obtenu dans la troisième étape (iii) est guidée vers un deuxième dispositif de séparation pour séparer cette partie en un cinquième mélange gazeux comprenant de l'hydrogène gazeux (H₂) et un sixième mélange gazeux comprenant du dioxyde de carbone (CO₂),
dans lequel au moins une partie du cinquième mélange gazeux est guidée vers un deuxième dispositif de conversion dans lequel le cinquième mélange gazeux est converti en au moins un septième mélange gazeux exempt de soufre, **caractérisé en ce qu'**au moins une partie du septième mélange gazeux est guidée vers l'au moins un récipient (1, 2, 3, 4) afin de purger ce récipient.

6. Procédé selon la revendication 5, dans lequel le deuxième dispositif de séparation est l'un d'une membrane perméable à l'hydrogène gazeux (H₂) et d'un dispositif de séparation avec un procédé d'adsorption modulée en pression (procédé AMP).

7. Procédé selon l'une quelconque des revendications 4 et 5, dans lequel le deuxième dispositif de conversion est une pile à combustible.

8. Procédé selon l'une quelconque des revendications 4 à 7, dans lequel le générateur d'hydrogène est l'un d'un reformeur à vapeur, d'un reformeur autothermique et d'un réacteur à oxydation partielle.

9. Dispositif (60) de désulfuration selon un procédé selon la revendication 1 d'un premier mélange gazeux sulfureux comprenant au moins un gaz hydrocarboné, comprenant
un premier dispositif de séparation (10) pour séparer le premier mélange gazeux sulfureux avec un procédé d'adsorption modulée en pression (procédé AMP) en un deuxième mélange gazeux désulfuré et un troisième mélange gazeux sulfureux, ce premier dispositif de séparation (10) comprenant au moins un récipient (1, 2, 3, 4) dans lequel est reçue une masse d'adsorption (5) pour adsorber un matériau sulfureux, et
un premier dispositif de conversion (17, 20, 30, 35) pour convertir le deuxième mélange gazeux en au moins un quatrième mélange gazeux exempt de soufre, et
des moyens de conduit de retour (19, 24, 31, 34) pour guider au moins une partie du quatrième mélange gazeux exempt de soufre vers l'au moins un récipient (1, 2, 3, 4) afin de purger ce récipient,
dans lequel le premier mélange gazeux comprend du gaz naturel, **caractérisé en ce que** le premier dispositif de conversion est l'un d'un moteur à gaz (17) et d'une turbine à gaz.

10. Dispositif (65) de désulfuration selon un procédé selon la revendication 2 d'un premier mélange gazeux sulfureux comprenant au moins un gaz hydrocarboné, comprenant
un premier dispositif de séparation (10) pour séparer le premier mélange gazeux sulfureux avec un procédé d'adsorption modulée en pression (procédé AMP) en un deuxième mélange gazeux désulfuré et un troisième mélange gazeux sulfureux, ce premier dispositif de séparation (10) comprenant au moins un récipient (1, 2, 3, 4) dans lequel est reçue une masse d'adsorption (5) pour adsorber un matériau sulfureux, et
un premier dispositif de conversion (17, 20, 30, 35) pour convertir le deuxième mélange gazeux en au moins un quatrième mélange gazeux exempt de soufre, et des moyens de conduit de retour (19, 24, 31, 34) pour guider au moins une partie du quatrième mélange gazeux exempt de soufre vers l'au moins un récipient (1, 2, 3, 4) afin de purger ce récipient,
dans lequel le premier mélange gazeux comprend du gaz naturel, **caractérisé en ce que** le premier dispositif de conversion est une pile à combustible (35).

11. Dispositif selon l'une quelconque des revendications 9 et 10,
comprenant un deuxième dispositif de séparation (22) pour séparer au moins une partie du quatrième mélange gazeux exempt de soufre en un cinquième et un sixième mélange gazeux, **caractérisé par** des moyens de conduit de retour pour guider au moins une partie du cinquième ou du sixième mélange gazeux vers l'au moins un récipient (1, 2, 3, 4) afin de purger ce récipient.

12. Dispositif selon la revendication 11, **caractérisé en ce que** le deuxième dispositif de séparation comprend l'un d'une membrane (22) perméable à l'hydrogène gazeux (H₂) et d'un dispositif de séparation avec un procédé d'adsorption modulée en pression (procédé AMP).

13. Dispositif (90) de désulfuration selon un procédé selon la revendication 4 d'un premier mélange gazeux sulfureux comprenant au moins du gaz naturel, comprenant
un premier dispositif de séparation (10) pour séparer le premier mélange gazeux sulfureux avec un procédé d'adsorption modulée en pression (procédé AMP) en un deuxième mélange gazeux désulfuré et un troisième mélange gazeux sulfureux, ce premier dispositif de séparation (10) comprenant au moins un récipient (1, 2, 3, 4) dans lequel est reçue une masse d'adsorption (5) pour adsorber un matériau sulfureux,
un premier dispositif de conversion (30) pour convertir le deuxième mélange gazeux en au moins un quatrième mélange gazeux comprenant de l'hydrogène gazeux (H₂) et du dioxyde de carbone (CO₂), ce premier dispositif de conversion comprenant un générateur d'hydrogène (30), et
un deuxième dispositif de conversion (29) pour convertir le quatrième mélange gazeux en au moins un mélange gazeux résiduel exempt de soufre, **caractérisé par** des moyens de conduit de retour (31) pour guider au moins une partie du mélange gazeux résiduel vers l'au moins un récipient (1, 2, 3, 4) afin de purger ce récipient.

14. Dispositif selon l'une quelconque des revendications 12 et 13,
**caractérisé en ce que** le deuxième dispositif de conversion est une pile à combustible (29).

15. Dispositif selon l'une quelconque des revendications 12 à 14,
**caractérisé en ce que** le générateur d'hydrogène est l'un d'un reformeur à vapeur (20), d'un reformeur autothermique (30) et d'un réacteur à oxydation partielle.
